# EUROPÄISCHE PATENTANMELDUNG

(11) **EP 2 072 371 A2**
(43) Veröffentlichungstag der Anmeldung: **24.06.2009**
(21) Anmeldenummer: 08170976.8
(22) Anmeldetag: 08.12.2008
(51) Int. Cl.: B62B 3/14, B62B 5/06

(54) **Stapelbarer Transportwagen**

(30) Priorität: 18.12.2007 DE 102007061680; 09.10.2008 DE 102008050616
(71) Anmelder: Wanzl Metallwarenfabrik GmbH, 89336 Leipheim (DE)
(72) Erfinder: Eckert, Rainer, 73230 Kirchheim unter Teck (DE); Kraus, Bernd, 89356 Haldenwang (DE); Kowal, Peter, 89312 Günzburg (DE)

(57) **Zusammenfassung**

Die Erfindung betrifft einen stapelbarer Transportwagen mit einem Fahrgestell, das einen Korb trägt, dessen rückwärtiges Ende durch eine Klappe verschließbar ist, wobei der Korb mit einer Schiebeeinrichtung ausgestattet ist, und wobei am Fahrgestell Rollen angeordnet sind, und wobei weiterhin zwei Griffe (1) gegenüberliegend jeweils am Grifftragarm des Korbes angeordnet sind.

Die Erfindung zeichnet sich dadurch aus, dass ein RFID-Tag (1.2.2) vorgesehen ist, der in wenigstens einem der Griffe (1) eingebaut ist und vollständig von dem Griff (1) umschlossen ist.

## Beschreibung

Die Erfindung betrifft einen stapelbaren Transportwagen nach dem Oberbegriff des ersten Patentanspruchs der Anmeldung.

Ein stapelbarer Einkaufswagen ist beispielsweise aus der europäischen Patentanmeldung EP 1 693 809 bekannt. Dieser weist einen berührungsfrei abrufbaren Transponder auf. Dabei kann der Transponder in einer Haltemanschette eingegossen sein und an der Griffstange des Wagens befestigt werden. In der Haltemanschette verläuft weiterhin eine Transponder-Antenne, die einerseits dem Datenaustausch mit einer Lesestation dient und andererseits - bei Einsatz eines passiven Transponders - diesen mit elektrischer Energie versorgt.

Alternativ ist der Transponder an ein Fahrgestell, einen auf dem Fahrgestell angeordneten Rahmen oder an eine am Rahmen befestigte Warenaufnahme des Einkaufswagens mittels Spritzguss-, Klebe-, Löt-, Schweiß-, Klemm- oder Schraub-Verbindungstechnik angeordnet.

In Zusammenhang mit metallischen Werkstoffen, welche üblicherweise bei Transportwagen, im Bereich des Rahmens/Fahrgestells, Verwendung finden, ist, um Störungen zu vermeiden, ein möglichst großer Abstand zwischen dem metallischen Werkstoff und einem eingesetzten passiven Transponder einzuhalten. Gleiches gilt für die Warenaufnahme bzw. den Korb des Transportwagens. Dies kann jedoch bei einer Anordnung an oder einer Einbringung im Rahmen oder dem Korb eines Transportwagens nicht eingehalten werden.

Eine Manschette, wie sie im Stand der Technik beschrieben ist, lässt sich leicht entfernen oder beschädigen, da sie ein zusätzliches Bauteil darstellt, welches auf der Griffstange angeordnet ist.

Die Aufgabe der Erfindung besteht darin, eine verbesserte Anordnung eines RFID-Tags am Transportwagen und insbesondere in einem Griff aufzuzeigen.

Die Erfindung löst die Aufgabe mit den Merkmalen im Hauptanspruch.

Der RFID-Tag 1.2.2 ist von außen nicht sichtbar und insbesondere vor schädlichen Umwelteinflüssen, wie Feuchtigkeit und/oder UV-Strahlung geschützt. Auch eine mutwillige Zerstörung kann hierdurch unterbunden werden.

Weiterhin wird die Teilevielfalt verringert und hierdurch die Anzahl der Prozessschritte eingespart. Somit werden die Herstellkosten verringert.

Die Erfindung wird anhand von Ausführungsbeispielen näher erläutert.

Es zeigt
- Fig. 1: einen Griff mit einem RFID-Tag in 3-D-Darstellung;
- Fig. 1a: eine Schnittdarstellung des Griffes mit dem RFID-Tag;
- Fig. 2: eine 2. Ausführungsart eines Griffs mit einem RFID-Tag in 3-D-Darstellung;
- Fig. 3a: ein erstes und ein zweites Teil einer 3. Ausführungsart eines Griffs in 3-D-Ansicht;
- Fig. 3b: das erste und das zweite Teil des Griffs in Seitenansicht;
- Fig. 3c: das erste Teil des Griffs in Draufsicht;
- Fig. 4a: ein erstes und ein zweites Teil einer 4. Ausführungsart eines Griffs in 3-D-Ansicht;
- Fig. 4b: das erste und das zweite Teil des Griffs in Seitenansicht.

Die Erfindung betrifft einen stapelbaren Transportwagen mit einem Fahrgestell, das einen Korb trägt, dessen rückwärtiges Ende durch eine Klappe verschließbar ist. Der Korb ist mit einer Schiebeeinrichtung ausgestattet. Die Schiebeeinrichtung kann aus zwei Griffen 1 und einer Griffstange oder nur aus zwei Griffen 1 gebildet sein. Am Fahrgestell sind Rollen angeordnet. Jeweils am Grifftragarm des Korbes sind zwei Griffe 1 gegenüberliegend angeordnet. Beide Griffe 1 sind vorzugsweise durch eine Griffstange miteinander verbunden.

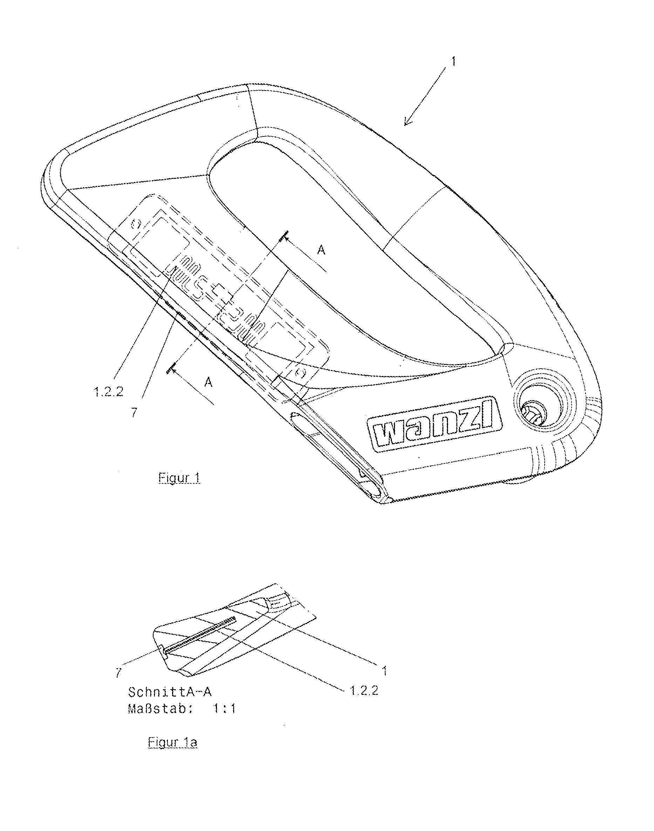

Es ist ein RFID-Tag 1.2.2 vorgesehen, der in wenigstens einem der Griffe 1 eingebaut ist und vollständig von dem Griff 1 umschlossen ist. Figur 1 zeigt beispielhaft einen Griff 1, in dem ein RFID-Tag 1.2.2 eingebaut ist. Die Lage des RFID-Tags 1.2.2 ist frei wählbar. Je nach Größe des RFID-Tags 1.2.2 ist die bestmögliche Lage an einer geeigneten Stelle zu bestimmen. Der dargestellte RFID-Tag 1.2.2 weist eine rechteckige Form auf. Daher ist dieser in dem linken Bereich des Griffes 1 eingebaut. Die Hand zum Schieben des Wagens umgreift die rechte Seite des Griffs, so dass sich die linke Seite zum Vorsehen des RFID-Tags 1.2.2 als vorteilhaft erwiesen hat, da insbesondere Störungen vermieden werden können.

Von außen ist der RFID-Tag 1.2.2 nicht sichtbar, was eine ungewünschte mutwillige Zerstörung verhindert. Auch kann ein Eindringen von Feuchtigkeit ausgeschlossen werden. Der RFID-Tag 1.2.2 ist vor weiteren Umwelteinflüssen geschützt.

Figur 1a zeigt in Schnittdarstellung den in dem Griff 1 eingebauten RFID-Tag 1.2.2. Der Griff 1 weist eine Öffnung 7 auf. Dort wird der RFID-Tag 1.2.2 eingelegt und schließlich während des Fertigungsprozesses mit Material aufgefüllt. Vorzugsweise wird der RFID-Tag 1.2.2 mittels Haltemitteln in seiner Position gehalten. Somit kann der RFID-Tag 1.2.2 in der gewünschten Position gehalten werden, wenn die Öffnung 7 mit Material aufgefüllt wird.

Das Material kann das gleiche sein aus dem auch der Griff gebildet ist, es besteht aber auch die Möglichkeit ein anderes Material zu verwenden.

Beansprucht wird in der vorliegenden Anmeldung auch ein Verfahren zur Herstellung eines Griffs 1 für einen Transportwagen nach Anspruch 1. Der Griff 1 weist eine Öffnung 7 auf, in der der RFID-Tag 1.2.2 während des Fertigungsprozesses gelegt wird und schließlich die Öffnung 7 ausgefüllt wird.

In einem alternativen Verfahren zur Herstellung eines Griffs für einen Transportwagen nach Anspruch 1 wird der RFID-Tag 1.2.2 während des Fertigungsprozesses vollständig mit dem für den Griff 1 verwendeten Material umspritzt.

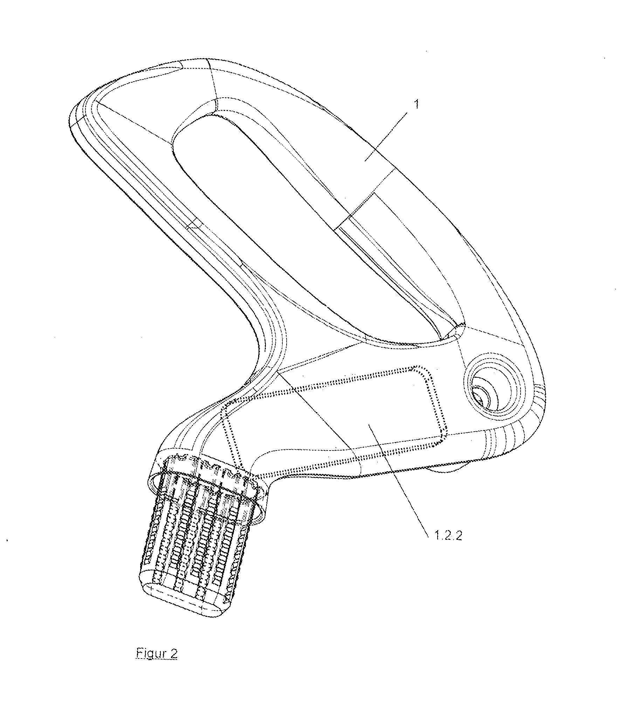

Auch gibt es alternative Ausführungsformen des Griffs 1. Figur 2 zeigt eine 2. Ausführungsform eines Griffes 1. Der RFID-Tag 1.2.2 ist waagrecht und im unteren Bereich des Griffs 1 angeordnet. In diesem Ausführungsbeispiel findet, wie in Figur 2 dargestellt, der gleiche RFID-Tag 1.2.2 Einsatz, es wäre aber auch denkbar, eine andere Größe eines RFID-Tags 1.2.2 zu verwenden.

In einer weiteren Ausführung ist wenigstens einer der beiden Griffe 1 aus einem ersten Teil 1.1 und einem zweiten Teil 1.2 gebildet. Beide Teile 1.1, 1.2 sind formschlüssig miteinander verbunden. Das zweite Teil 1.2 weist eine Aufnahme 1.2.1 auf, in der ein RFID-Tag 1.2.2 angeordnet ist. Das zweite Teil 1.2 ist wechselbar im ersten Teil 1.1 einsetzbar.

Jeder Griff 1 weist einen Hand-Bereich 2.1 und einen übrigen Bereich 2.2 auf. Das zweite Teil 1.2 ist sowohl in den Hand-Bereich 2.1 als auch in den übrigen Bereich 2.2 einsetzbar.

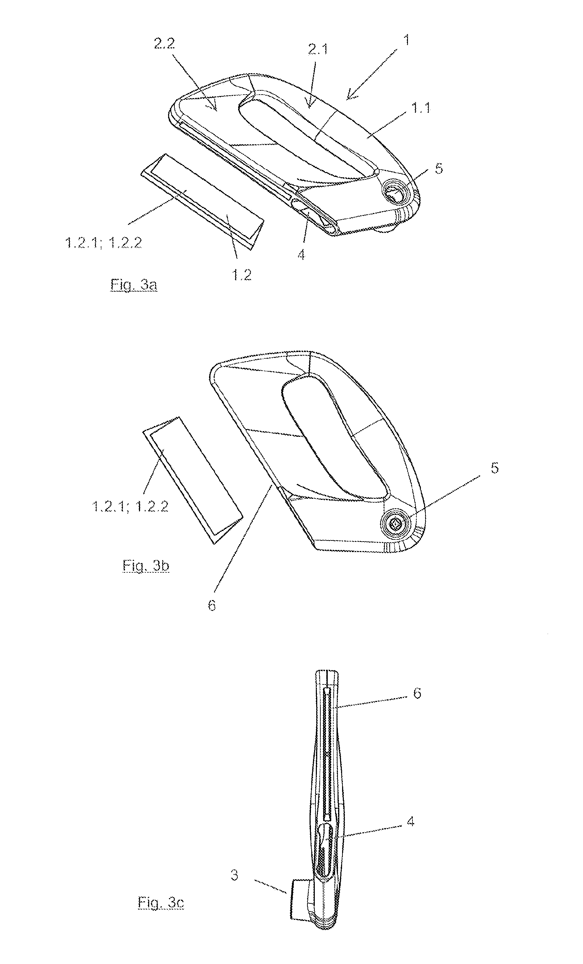

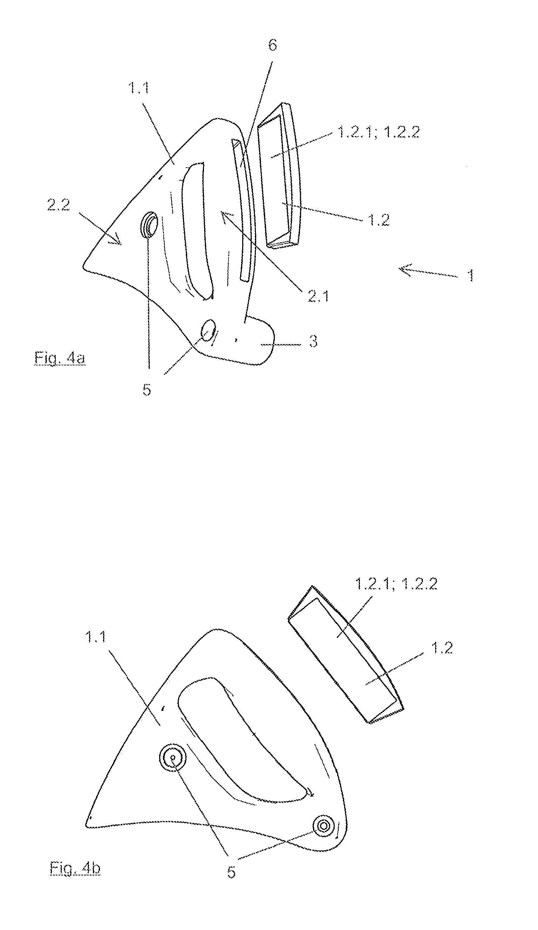

In den Figuren 3a, 3b und 3c der 3. Variante ist das zweite Teil 1.2 in den übrigen Bereich 2.2 einzusetzen. In den Figuren 4a und 4b der 4. Variante ist das zweite Teil 1.2 in den Hand-Bereich 2.1 einzusetzen.

Jeder Griff 1 weist an seiner Innenseite jeweils eine Aufnahme 3 auf. Diese Aufnahme 3 ist für das Einsetzen in eine Griffstange eines Wagens vorgesehen. Es kann auch das Anordnen eines Griffs an einen Wagen ohne Griffstange denkbar sein, dann ist die Aufnahme 3 dahingehend zu verändern, dass der Griff 1 sicher an Teilen des Korbes und/oder der Klappe eines Wagens angeordnet ist.

Nachdem jeder Griff 1 auf einen Grifftragarm montiert ist und eine Griffstange zwischen beiden Griffen 1 in den Aufnahmen 3 angeordnet ist, wird ein Sicherungsmittel durch die Öffnung 5 der Griffe 1 eingebracht. Dieses Sicherungsmittel sichert den Griff 1 in seiner Position. Die Öffnung 5 ist an der entsprechenden Stelle am Griff 1 vorzusehen. In den dargestellten Figuren ist das jeweils die rechte untere Ecke. Es können auch mehrere Öffnungen 5 vorgesehen sein. Hierbei kann eine Öffnung 5 für die Anordnung des Griffs 1 an der Griffstange dienen, die andere Öffnung 5 für das Anbringen des Griffs 1 am Grifftragarm.

Jeder Griff 1 weist eine Ausnehmung 4 auf. Diese ist in den Figuren 3a und 3c dargestellt. Die Ausnehmung 4 ist ovalförmig und für das Anbringen des Griffs 1 am Grifftragarm des Wagens vorgesehen.

Der zweite Teil 1.2 weist eine Aufnahme 1.2.1 auf. Die Aufnahme 1.2.1 kann, wie in Figuren 3a, 3b, 4a und 4b dargestellt, eine rechteckige Fläche sein, die eine Einbuchtung darstellt. Auf dieser Fläche ist der RFID-Tag 1.2.2 angeordnet. Vorzugsweise ist dieser Tag ein passiver UHF-RFID-Tag. Es ist aber auch vorstellbar, einen anderen RFID-Tag einzusetzen.

Jeder erste Teil 1.1 weist einen Einschub 6 für den zweiten Teil 1.2 auf. Der Einschub 6 ist vorzugsweise durch einen Schlitz gebildet, wie in den Figuren 3a und 3c dargestellt.

In der dargestellten Form weist das zweite Teil 1.2 eine leicht konische Form auf. Diese bewirkt, dass das zweite Teil 1.2 wechselbar in den Einschub 6 eingebracht werden kann, sich nicht selbstständig löst und dennoch für Wartungsarbeiten oder einen Austausch des Tags 1.2.2 wieder herausgenommen werden kann.

In einer weiterführenden, nicht dargestellten Ausführung sind am ersten Teil 1.1 und/oder am zweiten Teil 1.2 Halteelemente vorgesehen. Insbesondere ist der Schlitz mit Rastnasen, einer rastbaren Leiste oder ähnlichen Halteelementen versehen, was bewirkt, dass das zweite Teil 1.2 sicher im ersten Teil 1.1 angeordnet ist, aber dennoch wechselbar ist. Auch das zweite Teil 1.2 kann mit Halteelementen ausgestattet sein.

In einer weiteren Ausführung ist das zweite Teil 1.2 mit dem ersten Teil 1.1 verklebt.

In nicht genutztem Zustand sind die Wagen in Reihen ineinander gestapelt und in so genannten Parkboxen oder Parkstationen, die aus Holmen gebildet sind, abgestellt.

Es bietet sich daher an, eine Antenne jeweils an einer oder beiden Seitenwänden einer Parkbox auf Höhe des Griffes 1, oder aber an den Holmen einer Parkstation, anzubringen. Der Abstand zwischen RFID-Tag und Antenne bzw. Antennen kann somit klein gehalten werden, was sich vorteilhaft auf die Sende- bzw. Leseleistung auswirkt.

Jede Antenne kann in ein Bauteil der Parkbox oder der Parkstation eingebracht sein oder von außen angeordnet werden.

### Bezugszeichenliste

- 1: Griff
- 1.1: erstes Teil
- 1.2: zweites Teil
- 1.2.1: Aufnahme
- 1.2.2: RFID-Tag, Tag
- 2.1: Handbereich
- 2.2: übriger Bereich
- 3: Aufnahme (Griffstange)
- 4: Ausnehmung (Grifftragarm)
- 5: Öffnung (Sicherungsmittel)
- 6: Einschub (erstes Teil)
- 7: Öffnung

## Patentansprüche

1. Stapelbarer Transportwagen mit einem Fahrgestell, das einen Korb trägt, dessen rückwärtiges Ende durch eine Klappe verschließbar ist, wobei der Korb mit einer Schiebeeinrichtung ausgestattet ist, und wobei am Fahrgestell Rollen angeordnet sind, und wobei weiterhin zwei Griffe (1) gegenüberliegend jeweils am Grifftragarm des Korbes angeordnet sind, **dadurch gekennzeichnet, dass** ein RFID-Tag (1.2.2) vorgesehen ist, der in wenigstens einem der Griffe (1) eingebaut ist und vollständig von dem Griff (1) umschlossen ist.

2. Stapelbarer Transportwagen nach Anspruch 1, **dadurch gekennzeichnet, dass** wenigstens einer der beiden Griffe (1) aus einem ersten (1.1) und einem zweiten Teil (1.2) gebildet ist, wobei beide Teile (1.1, 1.2) formschlüssig miteinander verbunden sind, und wobei das zweite Teil (1.2) eine Aufnahme (1.2.1) aufweist, in der ein RFID-Tag (1.2.2) angeordnet ist.

3. Stapelbarer Transportwagen nach Anspruch 2, **dadurch gekennzeichnet, dass** am ersten Teil (1.1) und/oder am zweiten Teil (1.2) Halteelemente vorgesehen sind.

4. Stapelbarer Transportwagen nach den Ansprüchen 2 und 3, **dadurch gekennzeichnet, dass** das zweite Teil (1.2) wechselbar im ersten Teil (1.1) einsetzbar ist.

5. Stapelbarer Transportwagen nach den Ansprüchen 2 bis 4, **dadurch gekennzeichnet, dass** jeder Griff 1 einen Hand-Bereich (2.1) und einen übrigen Bereich (2.2) aufweist, und wobei das zweite Teil (1.2) sowohl in den Hand-Bereich (2.1) als auch in den übrigen Bereich (2.2) einsetzbar ist.

6. Verfahren zur Herstellung eines Griffs für einen Transportwagen nach Anspruch 1, **dadurch gekennzeichnet, dass** der RFID-Tag (1.2.2) während des Fertigungsprozesses vollständig mit dem für den Griff (1) verwendeten Material umspritzt wird.

7. Verfahren zur Herstellung eines Griffs für einen Transportwagen nach Anspruch 1, **dadurch gekennzeichnet, dass** der Griff (1) eine Öffnung (7) aufweist, in der der RFID-Tag (1.2.2) während des Fertigungsprozesses gelegt wird und dass schließlich die Öffnung (7) ausgefüllt wird.
